Europäisches Patentamt

European Patent Office

Office européen des brevets

(19)

(11) Publication number: **0 052 430**
**B1**

(12) **EUROPEAN PATENT SPECIFICATION**

(45) Date of publication of patent specification: **27.06.84**

(51) Int. Cl.³: **C 04 B 7/44, F 27 B 7/20**

(21) Application number: **81304900.4**

(22) Date of filing: **20.10.81**

(54) Method and apparatus for thermally treating pulverulent material.

(30) Priority: **17.11.80 GB 8036838**

(43) Date of publication of application:
**26.05.82 Bulletin 82/21**

(45) Publication of the grant of the patent:
**27.06.84 Bulletin 84/26**

(84) Designated Contracting States:
**BE DE FR GB IT LU NL**

(56) References cited:
**DE - A - 2 738 987**
**FR - A - 2 279 043**
**GB - A - 457 957**
**GB - A - 1 396 402**
**GB - A - 1 446 241**
**US - A - 3 603 568**

(73) Proprietor: **F.L. Smidth & Co. A/S**
**77 Vigerslev Allé**
**DK-2500 Valby Copenhagen (DK)**

(72) Inventor: **Knudsen, Hans Brun**
**77 Vigerslev Alle**
**DK-2500 Valby Copenhagen (DK)**

(74) Representative: **Jackson, Peter Arthur et al,**
**GILL JENNINGS & EVERY 53-64 Chancery Lane**
**London WC2A 1HN (GB)**

Courier Press, Leamington Spa, England.

# Description

The present invention relates to a method of and an apparatus for thermally treating pulverulent material, i.e. keeping the material at a certain temperature, the treating temperature, for a desired period of time, in particular sintering pulverulent material, in a rotary kiln with an axis slightly inclined to the horizontal.

The method is especially applicable for thermally treating materials which tend to become sticky at the treating temperature, in particular for sintering pulverulent materials, i.e. agglomerating these by heating without complete melting. However, the method is also useful for general thermal treatment where sintering is not intended, e.g. for burning Bauxite, Mesa and phosphate bearing ores.

An example of a sintering process to which the invention is particularly applicable is the manufacture of cement clinker where the pulverulent material to be sintered is hot calcined cement raw meal.

According to the traditional, and within the cement industry until now only feasible, method of sintering pulverulent materials the material is introduced in the form of a layer of material and sintered on its way through a rotary kiln, possibly co-currently but usually countercurrently to a flow of combustion gas passed through the rotary kiln and generated by combustion of fuel introduced at an air inlet end of the rotary kiln. Usually, the raw materials are subjected to preheating and calcination, i.e. decomposition of $CaCO_3$ to $CaO$ and $CO_2$, in suspension outside the rotary kiln. However, at least the heating from calcination temperature to sintering temperature as well as the sintering proper take place in the rotary kiln.

This type of rotary kiln is however not an ideal apparatus. The essential drawback is the relative inefficient heat transfer during the process of heating the material to the treating, e.g. the sintering temperature. Because of this the machinery dimensions are necessarily large, resulting in high initial apparatus costs, a substantial heat loss and a considerable thermal inertia leading to long starting up periods and control problems as well.

Another disadvantage of the rotary kiln is the rather limited number of variable process parameters available; as a result of which it is difficult at the same time to optimise the heating up process and the thermal treating process.

Numerous proposals for eliminating these drawbacks have been made and can be classified in two groups:

The first group comprises methods for obtaining an improved heat economy of the rotary kiln.

The second group comprises attempts to replace the rotary kiln by another more efficient heat treating apparatus.

The first group includes a method for improving the heat exchange between particles of raw material and the hot combustion gases by alternatively lifting and dropping the particles during their passage down the kiln by means of trough-shaped conveyor flights to produce curtains of falling particles extending across the kiln as described in US—A—3,799,735 (Jensen). An improved heat economy is thus achieved but it cannot be said that the above drawbacks of the traditional rotary kiln have been eliminated satisfactorily.

To the same group belong two methods in which the rotary kiln is also used as a suspension preheater, as described in Japanese Patent publication No. 3916 (Mamoto) of 1963 and GB—A—1,396,402 (KHD).

The Japanese Patent publication relates to a process and kiln apparatus for burning cement wherein the heat transfer to the non-preheated material delivered to the kiln is sought to be maximized. According to this process cement raw materials are introduced either at the forward or at an intermediate position of the kiln suspended in a stream of hot air and allowed to be heated while flowing with the kiln gases towards the rear end of the kiln. Before the kiln gases reach the rear end of the kiln the material is supposed to be precipitated onto the kiln floor inside the kiln and the precipitated material is then subjected to further heat treatment while moving along the inclined kiln bottom towards its lower-lying forward end. For many reasons this method has not been in practical use. In order to obtain proper precipitation of the suspended material excessive kiln dimensions both with respect to kiln length and kiln diameter at the rear end would be necessary.

Another process and kiln apparatus, wherein the material passes through a reaction drum, e.g. rotary kiln twice, first in suspension and then in a precipitated state has been suggested. According to GB—A—1,396,402 the material is passed through a reaction chamber constructed as a rotational drum provided with a burner, i.e. a rotary kiln, as a suspension in a gas, withdrawn from the rotary kiln in suspension, precipitated from the gas in a separator, and reintroduced into the rotary kiln in the form of a layer of material and further heat treated while moving along the inclined kiln bottom.

Instead of arranging a burner in the rotational drum a combustion chamber may be provided upstream of the reaction chamber. In this case the material is suspended in and heated by the hot exit gas from the combustion chamber.

In both cases the precipitation problems inherent in the Japanese method are solved, but these methods are not suited for treating sticky materials such as cement raw meal at a temperature close to the sintering temperature because the material will build up in the precipitator and quickly block it.

The second group comprises proposals for abolishing the rotary kiln entirely.

Thus US—A—2,776,132 (Pyzel) discloses a method of manufacturing cement clinker according to which cement raw meal and fuel are introduced into a fluid bed where the heat generated by combustion of the fuel evokes partly calcining of raw meal and partly heating of the calcined raw meal to the temperature (approximately 1400°C—1450°C) at which the material sinters into cement clinker.

A later US—A—3,013,786 (Pyzel) discloses a similar method differing from the previous one in that the raw material is calcined not in a fluid bed, but suspended in a hot gas, whereafter the calcined material is separated from the gas and sintered in a fluid bed under simultaneous addition of fuel.

By both methods an improved heat economy is obtained because the heat transfer in suspension and in a fluid bed is far more efficient than in a rotary kiln. On the other hand another significant disadvantage is encountered which has prevented these methods from ever having been of practical use. The pulverulent materials are partly molten and extremely sticky at the sintering temperature. Consequently, a fluid bed with such material has a marked tendency to form cakings, leading to frequent interruptions in operation.

Previously, e.g. in US—A—2,489,211 (Witt) it has been proposed to sinter cement raw meal in suspension by head on collison of a flow of raw meal suspended in air with a flow of hot gas. This collison takes place in a reaction chamber in which the solid material is separated from the gas and sinks while the gas leaves the reaction chamber at the top.

This method has not been in practical use primarily because the material is not allowed sufficient reaction time for the mineral formation occuring at the sintering temperature, and secondly because, should any sintering occur, the material would deposit on the walls of the reaction chamber during the separation phase as a consequence of its sticky nature, ultimately blocking the chamber.

GB—A—959,446 (Heidelberg) proposes another method of manufacturing cement clinker by suspension sintering, according to which fine raw material in a reaction zone is introduced into an ascending hot gas stream having a temperature sufficient to cause calcining and sintering of the raw material, and a flow velocity sufficient to keep the raw material suspended in the gas stream until calcined and sintered. The calcined and sintered material is precipitated from the suspension and withdrawn from the reaction zone by briefly interrupting the introduction of raw material and hot gas.

This method has found no practical use either, partly because its batchwise nature makes it very difficult to achieve a homogeneous product, and partly because this method also leads to serious problems with cakings formed where the sticky material collides with the walls in the reaction zone.

US—A—3,603,568 (Ritzmann) discloses a continuous process with heating to sintering temperature and sintering of material in suspended state. The specification further discloses an apparatus for such heat treatment of fine material, e.g. cement raw material, comprising a multicyclone material preheater and a multicyclone cooler, and a burning section comprising a tubular firing chamber in which a suspension of preheated material is burned, the firing chamber being connected to a separating chamber constructed as an ordinary cyclone in which the product is precipitated.

This apparatus has not found practical use either within the cement industry, partly because of a marked tendency to the formation of cakings in the separating cyclone, and partly because realistic gas velocities and apparatus dimensions only allow a very short period of treatment which is insufficient for obtaining the desired mineral formation.

Finally, GB—A—457,957 (Saint Jacques) discloses a furnance for the treatment of pulverulent material said to be particularly suited for use in the production of cement clinker. The raw material, suspended in an air flow, is introduced tangentially at the top of this furnace which has the form of a vertically oriented cylinder. Further down additional air is introduced along with fuel. During the combustion the raw material is heated to sintering temperature in a suspended state. As the only exit for the gas is an outlet in the top of the furnace, the gas with the suspended raw material particles will follow a spiral path downwards inside the furnace, after which the gas changes direction and leaves the furnace through the gas outlet, whereas the material particles are separated and sink to a rotating hearth provided with one or more tangential burners arranged at the bottom of the furnace.

This apparatus has not been used within the cement industry. One of the reasons for this is a strong tendency to the formation of cakings on the kiln walls.

It is the object of the invention to provide a method of thermally treating, in particularly sintering, pulverulent material in a rotary kiln with an axis slightly inclined to the horizontal, presenting the advantages of heat economy achieved by heating to treating temperature in suspension, and permitting a variable and controllable period of treating, while simultaneously avoiding the disadvantages mentioned above due to the sticky nature of the treated materials.

Further, it is the object of the invention to provide a compact apparatus for carrying out the method according to the invention.

Surprisingly, it has now been found that the object of the invention can be achieved by a method of thermally treating, in particular sintering, pulverulent material in a rotary kiln with an axis slightly inclined to the horizontal, the method comprising introducing the material into the upper end of the rotary kiln suspended in an oxygen-containing gas; maintaining a flame in the upper end of the rotary kiln by introducing fuel into the upper end of the rotary kiln; separating the material from the suspension in the upper end of the rotary kiln; thermally treating the separated material during its passage through the rotary kiln; discharging the thermally treated material from the lower end of the rotary kiln; and withdrawing the gas from the rotary kiln through one of its ends; characterised in that the suspension is introduced into the upper end of the rotary kiln with a tangential velocity component.

As a result the thermal treatment can be performed in a particularly advantageous way. The material to be treated is introduced into the rotary kiln suspended in oxygen-containing gas. As fuel is introduced simultaneously, heat is transferred from the burning fuel to the suspended material providing a heating which is far more rapid and efficient than in the traditional rotary kiln.

The critical phase during which the material is separated from the suspension mainly takes place in the upper end of the rotary kiln which acts as a horizontal cyclone because the tangential direction of the suspension causes a rapid helical movement of the suspension in the rotary kiln.

Heat is also transferred to the material in a very effective way while the material during the separation is rotating along the inner surface of the upper part of the drum in an annular material layer presenting a by far larger heat transferring surface layer than in a traditional rotary kiln.

The improved heat transferring properties permit a radical reduction of the apparatus dimensions with consequent advantages, and the use of low grade fuel not suitable for traditional sintering owing to an insufficiently high flame temperature.

Since the rotary kiln is kept slowly rotating tendency of the material to stick together and form cakings will lead to no problems because the rotary kiln will act not only as a separator but at the same time in a manner known per se as a rotating agglomeration drum.

On the contrary a sticky character of the material will be advantageous in causing a preliminary agglomeration of the fine material during the separation, leading to an improved separation efficiency.

Even a tendency to the formation of the cakings would be advantageous, because it leads to lining-protecting crust formation in the rotary kiln as in the hot zones of an ordinary rotary kiln.

The proper thermal treatment, in particular a final agglomeration and sintering, will take place while the separated material is passing through the rotary kiln, i.e. under conditions which can be controlled independently of the heating and separating process, e.g. by varying the speed of rotation of the rotary kiln.

The material discharged from the rotary kiln may be fed directly to a cooler of known type, e.g. a grate cooler or a rotary drum cooler, but it may also be subjected to an aftertreatment in a small rotating drum before it is directed to the cooler.

The advantage of carrying out the thermal treatment in two stages is that the material separation phase and part of the thermal treatment phase are kept apart so that the latter may take place in a drum having a particularly small radius, i.e. having particularly small heat loss.

The tangential velocity component of the suspension may be provided by introducing the suspension close to the cylindrical wall of the rotary kiln in a direction substantially parallel to a tangent to the closest part of the wall and almost perpendicular to the axis of the rotary kiln.

Collisions between suspended particles and between particles and walls outsides the rotary kiln may thus be kept at a minimum, i.e. any risk of formation of cakings outside the rotary kiln is minimized. Alternatively, the tangential velocity component of the suspension may be provided by bringing the suspension into rotation before it is introduced axially into the rotary kiln.

The advantage of axial introduction of a rotating suspension is that it is possible to reduce the area of a fixed upper end wall part of the kiln and let the peripheral part of the upper end wall be fixed to the rotary kiln. Problems of procuring an air-tight connection between movable and stationary apparaus parts are thus reduced.

The gas may be withdrawn from the rotary kiln through its upper or lower end.

The advantage of withdrawing the gas through the upper end of the rotary kiln is that all risks of resuspending the precipitated material are eliminated.

However, withdrawing the gas through the lower end of the rotary kiln presents several advantages, e.g. compensation for heat loss in the lower part of the rotary kiln, improved gas flow characteristics, and low pressure drop.

According to an advantageous further development of the invention an improved heat economy is achieved by preheating the material to an intermediate temperature below the treating temperature before it is suspended in the oxygen containing gas.

The intermediate temperature is chosen at such a level that the material shows no tendency to become sticky, the material can be preheated by e.g. exit gas from the rotary kiln and/or exit air from an air cooler cooling the end product.

According to another development of the invention the suspension is preheated to an intermediate temperature below the treating temperature before it is introduced in the rotary kiln by introduction of additional fuel into the suspension outside the rotary kiln.

A very effective heating to the treating temperature is thus achieved, partly in suspension outside the rotary kiln, partly in suspension inside the rotary kiln and partly in the above mentioned annular layer of separated material rotating around the inner surface of the upper part of the rotary kiln.

The present invention also includes an apparatus for thermally treating, in particular sintering, pulverulent materials by the method according to the invention, the apparatus comprising a rotary kiln which has an axis slightly inclined to the horizontal and which is provided with stationary end walls and with a fuel inlet at its upper end; a suspension inlet duct leading to the upper end of the rotary kiln; a gas outlet duct connected to one end of the rotary kiln; and an outlet for the thermally treated material at the lower end of the rotary kiln; characterised in that the suspension inlet duct leads to the upper end of the kiln in a plane substantially tangential to the inner circumferential surface of the rotary kiln.

In one construction, the rotary kiln is provided with a constriction member situated at a distance from the suspension inlet connection constituting approximately one third of the total length of the rotary kiln.

This constriction member, which is preferably provided as a thickening of the lining in the rotary kiln, and preferably has an inner diameter constituting 40—80% of the inner diameter of the rotary kiln provides a division of the rotary kiln into a separating and a thermally treating sections ensuring a highly efficient material separation.

According to one preferred embodiment the tangential relationship between the suspension inlet duct and the upper end of the rotary kiln is provided by connecting the suspension inlet duct to a inlet opening in the upper end wall close to the cylindrical wall of the rotary kiln so that the inlet duct leads substantially parallel to a tangent to the closest part of the cylindrical wall and almost perpendicular to the axis of the rotary kiln.

According to another preferred embodiment the tangential relationship between the suspension inlet duct and the upper end of the rotary kiln is provided via a stationary cylindrical member which is coaxial with and smaller in diameter than the rotary kiln and which provides a spiral flow chamber with a tangential suspension inlet and an axial suspension outlet communicating with the rotary kiln.

The connection between the gas outlet duct and the rotary kiln may be provided by mounting the gas outlet duct at an outlet opening in one or other stationary end wall of the rotary kiln.

The outlet for the thermally treated material may be an opening in the lower part of the lower end wall of the rotary kiln, which may communicate with a cooler for the discharged material.

The invention is illustrated diagrammatically by way of example in the accompanying drawings, in which:—

Figures 1 to 6 show modifications of the suspension inlet end of the apparatus;

Figures 7 to 12 show modifications of the material outlet end of the apparatus; and,

Figures 13 and 14 show plants for producing cement comprising the apparatus according to the invention as a sintering reactor replacing the traditional rotary kiln.

In the figures the same reference numbers are used for identical apparatus parts.

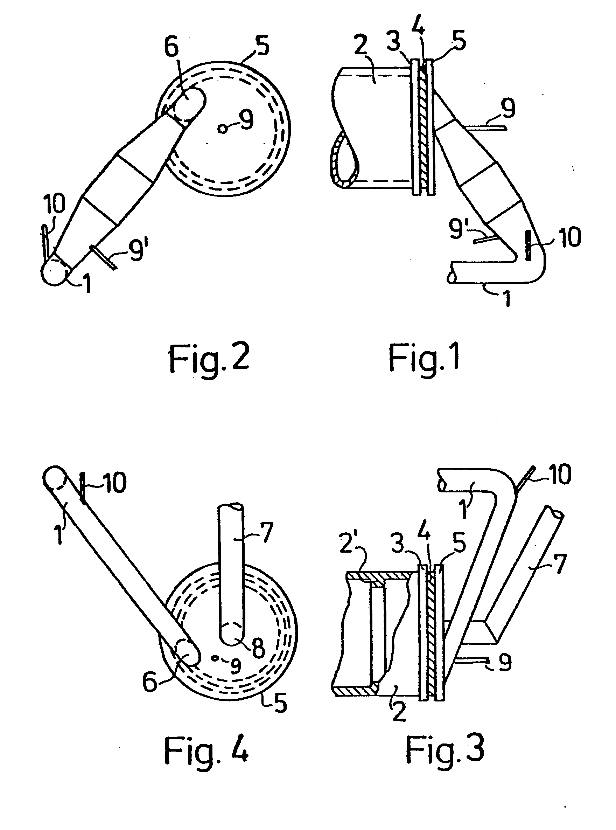

Figures 1 and 3 are schematic side views and Figures 2 and 4 are corresponding schematic front views showing direct tangential inlets of a suspension inlet duct 1 into a rotary kiln 2 having an end flange 3 sealed with a seal ring 4 to a stationary end wall 5 equipped with a fuel inlet pipe 9 and an opening 6 connected with the suspension inlet pipe. In the example shown in Figures 1 and 2 a gas outlet duct is situated at the opposite end of the rotary kiln 2. In the example shown in Figures 3 and 4 a gas outlet duct 7 is situated at the upper end of the rotary kiln 2 communicating with the rotary kiln via an opening 8 in the end wall 5. The suspension inlet duct 1 is provided with an inlet 10 for material and may be provided with an inlet 9' for additional fuel as shown in Figures 1 and 2. Figures 3 and 4 further show a constriction member 2' provided as a thickening of the lining in the rotary kiln 2.

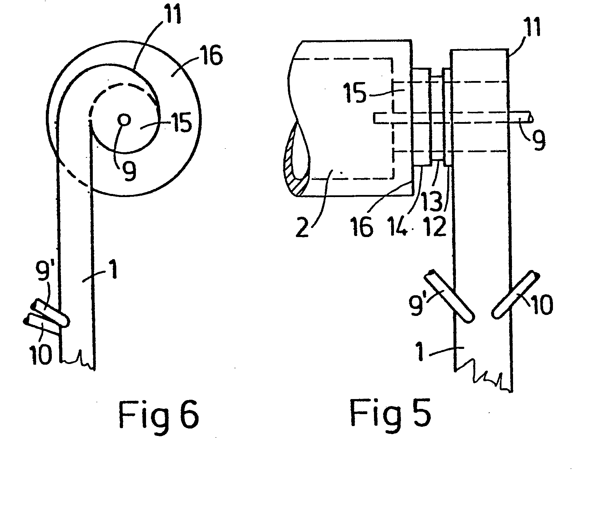

Figures 5 and 6 show as a schematic side view and a schematic front view, respectively, a suspension inlet with a spiral flow chamber 11, provided with a tangential suspension inlet duct 1 and an axial fuel inlet pipe 9 extending into the upper part of the rotary kiln 2 and having a flange 12 sealed with a seal ring 13 to a flange 14 on the upper end of the rotary kiln 2, defining an axial suspension inlet opening 15. A peripheral part 16 of the end wall of the rotary kiln is fixed to the rotary kiln. The suspension inlet duct 1 is provided with an inlet 10 for material and may be provided with an inlet 9' for additional fuel.

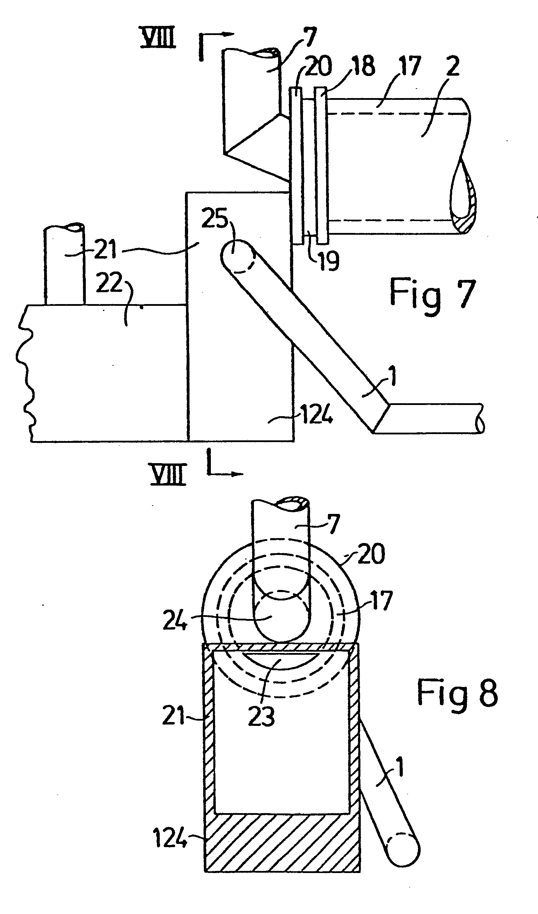

Figures 7, 9, and 11 are schematic side views showing details of the material outlet end of a rotary kiln 2. Figures 8, 10, and 12 are schematic sections taken on the lines VIII—VIII, X—X and XII—XII, respectively in Figures 7, 9, and 11.

Figures 7 to 12 show the lower part of the rotary kiln 2 provided with an inner lining 17 and a flange 18 sealed with a seal ring 19 to a stationary end wall 20 which is mounted to an air outlet 21 of a cooler 22. The lower part of the end wall 20 is provided with an opening 23 defining the material outlet of the rotary kiln 2 and the material inlet of the cooler 22.

In Figures 7, 8, 11 and 12 the upper part of the end wall 20 is provided with a second opening 24 defining an exhaust gas exit communicating with a gas outlet duct 7 situated at the lower end of the rotary kiln 2.

In Figures 7 and 8 the cooler 22 is a grate cooler with a double air outlet 21, the first for removing excess hot exit air from the cooler, situated at the top of the cooler, the second being box shaped with sidewalls 124 one of which is provided with an opening 25 communicating with the gas inlet end of a suspension inlet duct 1.

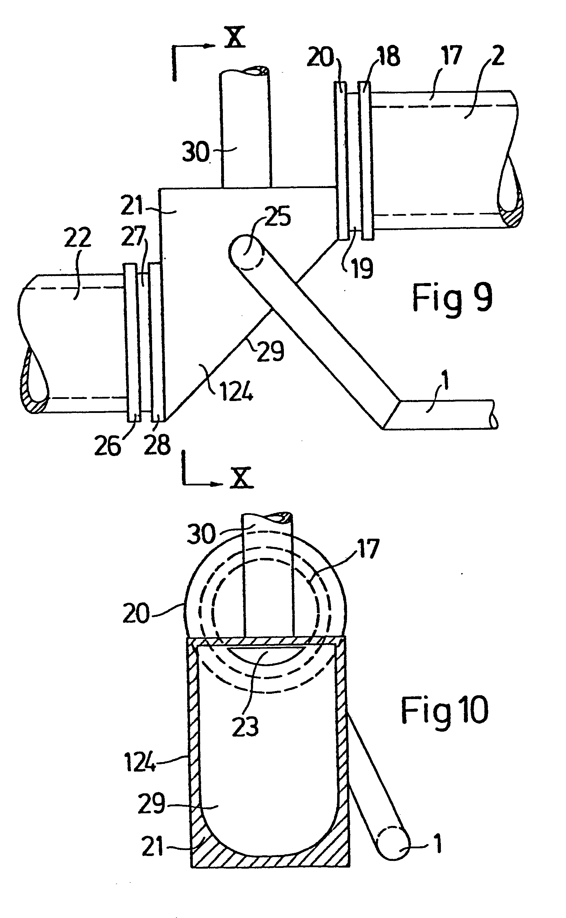

In Figures 9—12 the cooler 22 is a rotary drum cooler comprising a drum with an end flange 26 which by a seal ring 27 is sealed to a flange 28 on an exit air hood defining the cooler air outlet 21. The exit air hood is provided with an inclined bottom plate 29 leading the material from the material outlet opening 23 to the cooler drum and with sidewalls 124 one of which is provided with an opening 25 communicating with the gas inlet end of the suspension inlet duct 1.

In Figures 9 and 10 the top of the exit air hood is provided with a duct 30 for removing excess hot exit air from the cooler 22.

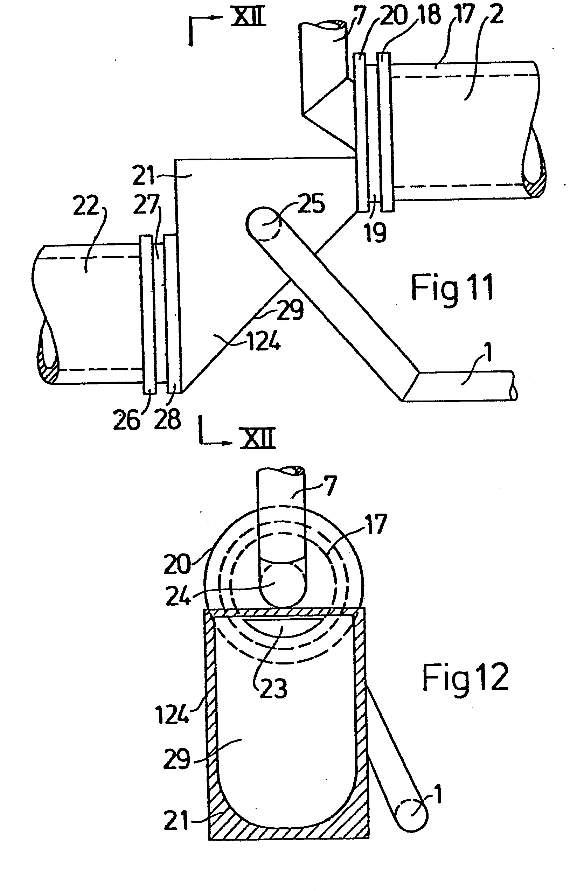

In Figures 11 and 12 the area of the material outlet opening 23 is greater than in Figures 9 and 10 permitting a part of the exit air from the cooler 22 to pass through the opening 23, quenching the gas at the lower end of the rotary kiln 2 and providing a precooling of the product before it is discharged to the cooler.

In the operation of the apparatus illustrated in Figures 1 to 12 the material to be thermally treated is suspended in hot exit air from the cooler 22 in the suspension inlet duct 1. The material to be treated is advantageously preheated, e.g. in suspension by exit gas from the rotary kiln 2. If desired the temperature of the material may be further increased by introducing fuel in the suspension inlet duct 1 above, below or at the same height as the material.

The gas velocity in the suspension inlet duct 1 is kept at a level so high that the suspended particles and the gas have almost the same velocity.

The material is subjected to the final heating to the treating temperature in the upper part of the rotary kiln 2 where the suspension is introduced with a tangential velocity component, fuel being introduced at the same place.

Due to the tangential velocity component the burning material suspension will perform a rapid helical movement in the upper part of the rotary kiln 2, and the material will be precipitated from the suspension as in an ordinary horizontal cyclone.

In the upper part of the rotary kiln 2 the precipitated material will rotate along the inner surface in an annular material layer, but due to friction the speed of rotation will decrease as the material moves further into the rotary kiln 2 and finally the precipitated material now heated to the treating temperature will settle on the bottom of the rotary kiln 2 and form a material layer which will be carried through and subjected to thermal treatment in the rotary kiln with a retention time being determined by the rotational speed of the rotary kiln.

At the lower end of the rotary kiln 2 the material is discharged through the material outlet opening and introduced into the air cooler 22 where it is cooled flowing countercurrently to cooling air. The hot exit air from the cooler 22 or a part thereof is introduced into the suspension inlet duct 1, the air flow being provided by means of a fan (not shown) and, if desired, being controlled by means of a valve (not shown) in the air inlet end of the suspension inlet duct 1.

A certain amount of (false) air may bypass the suspension inlet duct 1, and pass directly from the cooler 22 to the lower end of the rotary kiln 2 via the material outlet opening 23. However, if desired, the amount of false air can be kept very low by minimizing the area of the material outlet opening 23. As mentioned above a certain amount of false air may be desirable, especially when the gas outlet is arranged at the lower end of the rotary kiln 2, because it provides a quenching of the exit gas from the rotary kiln and a precooling of the thermally treated material.

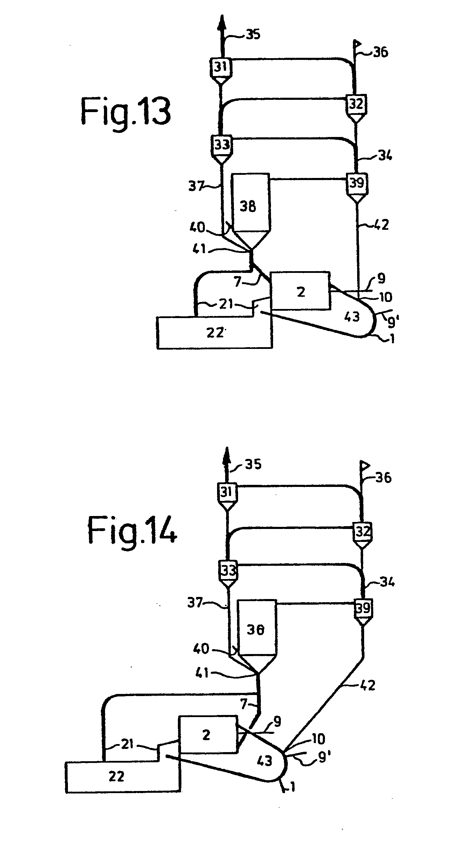

The plant shown in Figures 13—14 comprises a suspension preheater comprising cyclones 31, 32 and 33, an inlet 34 and an outlet 35 for heating gas, and an inlet 36 and an outlet 37 for pulverous cement raw material; a suspension calciner with a calcination chamber 38 provided with a separating cyclone 39, an inlet 40 for fuel, and an inlet 41 for combustion air and preheated raw material, and an outlet 42 for calcined material from the separating cyclone 39; and a sintering apparatus 43 comprising a rotary kiln 2, rotatable around an axis slightly inclined to the horizontal provided with a fuel inlet 9, a suspension inlet duct 1 provided with inlets 9' and 10 for fuel and material, respectively, the inlet duct 1 having a first end connected to an air cooler 22 and a second end connected to the upper end of the rotary kiln 2, and the rotary kiln 2 being provided with a gas outlet duct 7 connected to the lower or upper end of the rotary kiln 2 in Figures 13, 14 respectively.

The arrangement of the upper end of the rotary kiln 2 in Figure 13 may be as shown in Figures 1, 2 or Figures 5, 6 and at the lower end as shown in Figures 7, 8 or 11, 12. As mentioned with reference to Figures 9 to 12, the rotary drum cooler 22 may be replaced by a grate cooler. The arrangement at the upper end of the rotary kiln 2 in Figure 14 may be as shown in Figures 3, 4, or Figures 5, 6 and at the lower end as shown in Figure 14 or as shown in Figures 9, 10. The gas outlet duct 7 may be axially connected to the rotary kiln 2.

An air cooler 22 for cooling the sintered material has an air outlet 21 connected to both the inlet duct 1 of the sintering apparatus 43 and the air inlet 41 of the calciner.

The inlet duct 1 is arranged to introduce material with a tangential component in the rotary kiln 2 as shown in more detail in Figures 1 to 4.

Figures 13 and 14 show a grate cooler as cooler 22 which may be provided with a duct (not shown) for excess hot cooling air. Of course the grate cooler can be replaced by a rotary drum cooler.

The method of thermally treating pulverulent material is well suited for sintering material comprising oxides of calcium, silicon, aluminium, and iron, such as calcined cement raw meal to cement clinker. The method can also advantageously be used when extracting alumina from low grade alumina bearing ores e.g. by the so-called lime and lime/soda processes where a fineground mixture of alumina bearing ore and limestone/limestone and alkali metal carbonate, respectively, are calcined and sintered to clinker containing the alumina component in soluble form as calcium aluminate and alkali metal aluminate, respectively, and the impurities in insoluble form, e.g. the $SiO_2$ component as insoluble dicalciumsilicate.

When using the apparatus shown in Figure 13 or 14, for manufacturing cement clinker the procedure will normally be to introduce and preheat the cold cement raw meal in the suspension preheater, suspending the preheated raw meal in an oxygen containing gas in the calcination chamber 38 with simultaneous addition of fuel. The calcined material is then separated from the gas in the separating cyclone 39 and suspended in hot oxygen containing gas, i.e. hot exit air from the clinker cooler 22, in the suspension inlet duct 1.

The hot calcined material coming from the calciner will have an oxide composition typically within the range CaO: 62—66%, $Al_2O_3$: 6—10%, $SiO_2$: 17—24% and $Fe_2O_3$: 1—6% and a temperature of 800—850°C.

Fuel such as oil, gas or coal dust may be introduced in the hot air flow in the suspension inlet duct 1 before, after, simultaneously with, or together with the hot precalcined cement raw meal.

In a few seconds the material temperature will be raised to an intermediate temperature between the calcination and sintering temperature. The hot suspended material is then introduced in the upper end of the rotary kiln 2, fuel being simultaneously introduced at the same place via the pipe 9, possibly with the addition of further secondary air. The material temperature will be further raised to 1350—1450°C, being the sintering temperature of the materials involved.

In the upper part of the rotary kiln 2 the material is separated from the suspension and the separated agglomerating material is then sintered on its way down towards the material outlet. The retention time is controllable by setting the rotational speed of the rotary kiln 2, and will normally be 7—12 minutes.

The temperature of the discharged cement clinker is typically approximately 1400—1500°C. The discharged clinker is then air cooled in the clinker cooler 22.

Part of the hot cooling air, typically having a temperature of 750—900°C, is used as the above mentioned hot air in which the calcined raw meal is suspended in the suspension inlet duct 1. The remaining part is passed to the calciner in which it is used as a combustion air for the raw meal calcining.

The hot gas discharged from the rotary kiln 2 typically has a temperature of 1400—1500°C and is introduced through the duct 7 to the bottom of the calcination chamber 38 and is used as a supplementary heat source for calcining the material. The exit gas from the calciner is used in known manner for preheating the raw meal to be calcined.

To avoid problems of clogging in the exit pipe for the rotary kiln exit gas, it is advantageous to introduce uncalcined or calcined raw meal into the hot gas flow at a position close to the rotary kiln 2. The raw meal is at once suspended in the gas reducing the gas temperature to approximately 850°C/1050°C when uncalcined/calcined material is introduced. At these temperatures the risk of cakings is completely eliminated. Then the gas flow may be introduced into the separator, e.g. a cyclone separator for separating solid material which is passed to the calciner or to the suspension inlet duct 1 when calcined material is introduced.

Typical rotary kiln 2 dimensions are diameter 4 m., length 12—20 m. The rotational speed of the rotary kiln is typically 1—4 r.p.m. A typical inclination of the rotary kiln is 3° which is barely perceptible in the accompanying drawings. The degree of filling in the rotary kiln is typically 15—20 per cent. The production capacity of such a plant is 2000 tons/24 hrs.

## Claims

1. A method of thermally treating pulverulent material in a rotary kiln (2) with an axis slightly inclined to the horizontal, the method comprising introducing the material into the upper end of the rotary kiln suspended in an oxygen-containing gas; maintaining a flame in the upper end of the rotary kiln by introducing fuel into the upper end of the rotary kiln; separating the material from the suspension in the upper end of the rotary kiln; thermally treating the separated material during its passage through the rotary kiln; discharging the thermally treated material from the lower end of the rotary kiln; and withdrawing the gas from the rotary kiln through one of its ends; characterised in that the suspension is introduced into the upper end of the rotary kiln with a tangential velocity component.

2. A method according to claim 1, characterised in that the tangential velocity component of the suspension is provided by introducing the suspension close to the cylindrical wall of the rotary kiln in a direction substantially parallel to a tangent to the closest part of the wall and almost perpendicular to the axis of the rotary kiln.

3. A method according to claim 1, characterised in that the tangential velocity component of the suspension is provided by bringing the suspension into rotation before it is introduced axially into the rotary kiln.

4. A method according to any one of the preceding claims, characterised in that the gas is withdrawn from the rotary kiln through its upper end.

5. A method according to any one of claims 1 to 3, characterised in that the gas is withdrawn from the rotary kiln through its lower end.

6. A method according to any one of the preceding claims, characterised by preheating the material to an intermediate temperature below the treating temperature before it is suspended in the oxygen-containing gas.

7. A method according to any one of the preceding claims, characterised in preheating the suspension to an intermediate temperature below the treating temperature before it is introduced in the rotary kiln by introduction of additional fuel into the suspension outside the rotary kiln.

8. Apparatus for thermally treating pulverulent material by a method according to any one of the preceding claims, the apparatus comprising a rotary kiln (2) which has an axis slightly inclined to the horizontal and which is provided with stationary end walls (5) and with a fuel inlet (9) at its upper end; a suspension inlet duct (1) leading to the upper end of the rotary kiln; a gas outlet duct (7) connected to one end of the rotary kiln; and an outlet (23) for the thermally treated material at the lower end of the rotary kiln; characterised in that the suspension inlet duct leads to the upper end of the kiln in a plane substantially tangential to the inner circumferential surface of the rotary kiln.

9. Apparatus according to claim 8, characterised in that the rotary kiln is provided with a constriction member (2') situated at a distance from the suspension inlet duct constituting approximately one third of the total length of the rotary kiln.

10. Apparatus according to claim 8 or claim 9, characterised in that the tangential relationship between the suspension inlet duct and the upper end of the rotary kiln is provided by connecting the suspension inlet duct (7) to an inlet opening (6) in the upper end wall (5) close to the cylindrical wall of the rotary kiln so that the inlet duct leads substantially parallel to a tangent to the closest part of the cylindrical wall and almost perpendicular to the axis of the rotary kiln.

11. Apparatus according to claim 8 or claim 9, characterized in that the tangential relationship between the suspension inlet duct and the upper end of the rotary kiln is provided via a stationary cylindrical member (11) which is coaxial with and smaller in diameter than the rotary kiln and which provides a spiral flow chamber with a tangential suspension inlet (1) and an axial suspension outlet (15) communicating with the rotary kiln.

**Revendications**

1. Procédé pour traiter thermiquement de la matière pulvérulente dans un four rotatif (2) présentant un axe légèrement incliné sur l'horizontale, le procédé comprenant l'introduction de la matière en suspension dans un gaz contenant de l'oxygène, à l'extrémité supérieure du four rotatif; l'entretien d'une flamme, par introduction de combustible à l'extrémité supérieure du four rotatif, à cette extrémité supérieure du four rotatif, la séparation de la matière d'avec la suspension à l'extrémité supérieure du four rotatif; le traitement thermique de la matière séparée pendant son passage dans le four rotatif; le décharge de la matière, ayant subi le traitement thermique, de l'extrémité inférieure du four rotatif; et le retriat du gaz du four rotatif par une de ses extrémités, procédé caractérisé en ce que la suspension est introduite avec une composante de vitesse tangentielle à l'extrémité supérieure du four rotatif.

2. Procédé selon la revendication 1, caractérisé en ce que l'on obtient la composante de vitesse tangentielle de la suspension en introduisant la suspension près de la paroi cylindrique du four rotatif dans une direction sensiblement parallèle à une tangente à la partie la plus voisine de la paroi et quasi perpendiculaire à l'axe du four rotatif.

3. Procédé selon la revendication 1, caractérisé en ce qu'on obtient la composante de vitesse tangentielle de la suspension en mettant la suspension en rotation avant son introduction, dans le sens axial, dans le four rotatif.

4. Procédé selon l'une quelconque des revendications précédentes, caractérisé en ce que l'on retire le gaz du four rotatif par son extrémité supérieure.

5. Procédé selon l'une quelconque des revendications 1 à 3, caractérisé en ce qu'on retire le gaz du four rotatif par son extrémité inférieure.

6. Procédé selon l'une quelconque des revendications précédentes, caractérisé en ce qu'on préchauffe la matière jusqu'à une température intermédiare, inférieure à la température de traitement, avant de la mettre en suspension dans le gaz contenant de l'oxygène.

7. Procédé selon l'une quelconque des revendications précédentes, caractérisé en ce que, avant de l'introduire dans le four rotatif, on préchauffe la suspension jusqu'à une température intermédiare, inférieure à la température de traitement, par introduction de combustible supplémentaire dans la suspension à l'extérieur du four rotatif.

8. Appareil pour traiter par voie thermique de la matière pulvérulente par un procédé selon l'une quelconque des revendications précédentes, l'appareil comprenant un four rotatif (2) présentant un axe légèrement incliné sur l'horizontale et qui comporte des parois extrêmes fixes (5) et une admission (9) de combustible à son extrémité supérieure; un conduit (1) d'admission de la suspension conduisant à l'extrémité supérieure du four rotatif; un conduit (7) de sortie de gaz relié à une extrémité du four rotatif; et, à l'extrémité inférieure du four rotatif, une sortie (23) de la matière ayant subi le traitement thermique, appareil caractérisé en ce que le conduit d'admission de la suspension conduit vers l'extrémité supérieure du four dans un plan essentiellement tangential à la surface circonférentielle interne du four rotatif.

9. Appareil selon la revendication 8, caractérisé en ce que le four rotatif comporte un élément (2') de constriction situé à une distance du conduit d'admission de la suspension représentant environ un tiers de la longueur totale du four rotatif.

10. Appareil selon la revendication 8 ou 9, caractérisé en ce que on obtient la relation tangentielle entre le conduit d'admission de la suspension et l'extrémité supérieure du four rotatif en reliant le conduit (1) d'admission de la suspension à un orifice (6) d'admission ménagé dans la paroi (5) extrême supérieure près de la paroi cylindrique du four rotatif, de sorte que le conduit admission conduit de façon sensiblement parallèle à une tangente à la partie la plus proche de la paroi cylindrique et quasi perpendiculairement à l'axe du four rotatif.

11. Appareil selon la revendication 8 ou la revendication 9, caractérisé en ce qu'on obtient la relation tangentielle entre le conduit d'admission de suspension et l'extrémité supérieure du four rotatif à l'aide d'un élément (11) cylindrique fixe, qui a le même axe que le four rotatif et un diamètre plus petit que celui-ci et qui donne une chamber à écoulement en spirale comportant une admission (1) tangentielle de la suspension et une sortie (15) axiale de la suspension communiquant avec le four rotatif.

## Patentansprüche

1. Verfahren zur thermischen Behandlung pulverisierten Materials in einem Drehofen (2) mit einer zur Horizontalen leicht geneigten Achse, welches Verfahren umfaßt die Einführung des Materials in das obere Ende des Drehofens, und zwar suspendiert in einem sauerstoffhaltigen Gas, die Aufrechterhaltung einer Flamme in dem oberen Ende des Drehofens durch Einführen von Brennstoff in das obere Ende des Drehofens, das Abscheiden des Materials aus der Suspension in dem oberen Ende des Drehofens, das thermische Behandeln des abgeschiedenen Materials während seines Durchlaufs durch den Drehofen, das Aubführen des thermisch behandelten Materials aus dem unteren Ende des Drehofens und das Abziehen des Gases aus dem Drehofen durch eines seiner Enden, dadurch gekennzeichnet, daß die Suspension in das obere Ende des Drehofens mit einer tangentialen Geschwindigkeitskomponente eingeführt wird.

2. Verfahren nach Anspruch 1, dadurch gekennzeichnet, daß die tangentiale Geschwindigkeitskomponente der Suspension gebildet wird durch Einführen der Suspension nahe der zylindrischen Wand des Drehofens in einer Richtung im wesentlichen parallel zu einer Tangente zu dem nächstgelegenen Teil der Wand und fast senkrecht zur Achse des Drehofens.

3. Verfahren nach Anspruch 1, dadurch gekennzeichnet, daß die tangentiale Geschwindigkeitskomponente der Suspension gebildet wird, indem die Suspension in Rotation versetzt wird, bevor sie axial in den Drehofen eingeführt wird.

4. Verfahren nach einem der vorhergehenden Ansprüche, dadurch gekennzeichnet, daß das Gas aus dem Drehofen durch dessen oberes Ende hindruch abgezogen wird.

5. Verfahren nach irgendeinem der Ansprüche 1 bis 3, dadurch gekennzeichnet, daß das Gas aus dem Drehofen durch dessen unteres Ende hindurch abgezogen wird.

6. Verfahren nach irgendeinem der vorhergehenden Ansprüche, gekennzeichnet durch Vorwärmen des Materials auf eine Zwischentemperatur unterhalb der Behandlungstemperatur, bevor das Material in dem sauerstoffhaltigen Gas suspendiert wird.

7. Verfahren nach irgendeinem der vorhergehenden Ansprüche, gekennzeichnet durch Vorwärmen der Suspension auf eine Zwischentemperatur unterhalb der Behandlungstemperatur, bevor die Suspension in den Drehofen eingeführt wird, durch Einführung von zusätzlichem Brennstoff in die Suspension außerhalb des Ofens.

8. Vorrichtung zur thermischen Behandlung pulverisierten Materials mittels eines Verfahrens nach irgendeinem der vorhergehenden Ansprüche, welche Vorrichtung verfügt über einen Drehofen (2), der eine zur Horizontalen leicht geneigte Achse aufweist und der mit stationären Endwänden (5) und einem Brennstoffeinlaß (9) an seinem oberen Ende ausgestattet ist, über einen Suspensionseinlaßkanal (1), der zum oberen Ende des Drehofens führt, über einen Gasauslaßkanal (7) angeschlossen an das eine Ende des Drehofens und über einen Auslaß (23) für das thermisch behandelte Material an dem unteren Ende des Drehofens, dadurch gekennzeichnet, daß der Suspensionseinlaßkanal zu oberen Ende des Ofens in einer Ebene im wesentlichen tangential zur inneren Umfangsfläche des Drehofens führt.

9. Vorrichtung nach Anspruch 8, dadurch gekennzeichnet, daß der Drehofen mit einem Einschnürungsteil (2') angeordnet in einem Abstand von dem Suspensionseinlaßkanal, der etwa ein Drittel der Gesamtlänge des Drehofens bildet, ausgestattet ist.

10. Vorrichtung nach Anspruch 8 oder 9, dadurch gekennzeichnet, daß die tangentiale

Beziehung zwischen dem Suspensionseinlaßkanal und dem oberen Ende des Drehofens durch Anschließen des Suspensionseinlaßkanals (7) an eine Einlaßöffnung (6) in der oberen Endwand (5) nahe der zylindrischen Wand des Drehofens gebildet ist, so daß der Einlaßkanal im wesentlichen parallel zu einer Tangente zu dem nächstgelegenen Teil der zylindrischen Wand und fast senkrecht zur Achse des Drehofens führt.

11. Vorrichtung nach Anspruch 8 oder 9, dadurch gekennzeichnet, daß die tangentiale Beziehung zwischen dem Suspensionseinlaßkanal und dem oberen Ende des Drehofens durch ein stationäres Zylinderteil (11) gebildet ist, das koaxial zum Drehofen und im Durchmesser kleiner als dieser ist und das eine Spiral-stromkammer mit einem tangentialen Suspen-sionseinlaß (1) und einem axialen Suspensionsauslaß (15) bildet, der mit dem Drehofen in Verbindung steht.

Fig. 2          Fig. 1

Fig. 4          Fig. 3

Fig 6

Fig 5

0 052 430

Fig 7

Fig 8

Fig 9

Fig 10

Fig 11

Fig 12

Fig.13

Fig.14